(19) Europäisches Patentamt
European Patent Office
Office européen des brevets

(11) **EP 2 590 450 A1**

(12) **EUROPEAN PATENT APPLICATION**
published in accordance with Art. 153(4) EPC

(43) Date of publication:
08.05.2013 Bulletin 2013/19

(51) Int Cl.:
*H04W 48/20* (2009.01)

(21) Application number: 10853955.2

(22) Date of filing: 19.10.2010

(86) International application number:
PCT/CN2010/077885

(87) International publication number:
WO 2012/000252 (05.01.2012 Gazette 2012/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 30.06.2010 CN 201010222848

(71) Applicant: ZTE Corporation
Shenzhen, Guangdong 518057 (CN)

(72) Inventors:
• WANG, Wenhuan
Shenzhen
Guangdong 518057 (CN)

• LIU, Min
Shenzhen
Guangdong 518057 (CN)
• YAO, Ke
Shenzhen
Guangdong 518057 (CN)

(74) Representative: Tischner, Oliver et al
Lavoix Munich
Bayerstrasse 85a
80335 Munich (DE)

(54) **METHOD AND APPARATUS FOR SELECTING COORDINATED SENDING POINT**

(57) A method and an apparatus for selecting a co-ordinated sending point are disclosed. In step A, a serving base station receives measurement information of a coordinated cell reported by a mobile station, wherein the measurement information is acquired after the mobile station performs measurement on coordinated cells in a predetermined first coordinated cell list of a serving cell, and establishes, based on the reported measurement information, a second coordinated cell list of the serving cell, wherein coordinated cells in the second coordinated cell list are coordinated cells that are listed in the first coordinated cell list and have a signal strength greater than a predetermined first threshold value; and in step B, the serving base station determines coordinated cells in the second coordinated cell list that satisfy preset coordinated conditions to be coordinated sending points of the serving cell. With the disclosure, the technical problem that no specific flow of selecting a coordinated sending point is provided in the prior art is solved.

Fig. 1

```
                                                              101
┌─────────────────────────────────────────────┐
│ A serving base station establishes, based on │
│ measurement information of a coordinated cell │
│ reported by a mobile station, a second        │
│ coordinated cell list                         │
└─────────────────────────────────────────────┘
                        │
                        ▼
                                                              102
┌─────────────────────────────────────────────┐
│ The serving base station determines the       │
│ coordinated cells in the second coordinated   │
│ cell list, which satisfy preset coordinated   │
│ conditions, to be coordinated sending points  │
│ of the serving cell                           │
└─────────────────────────────────────────────┘
```

## Description

### TECHNICAL FIELD

The disclosure relates to the field of digital communications, and more particularly, to a method and an apparatus for selecting a coordinated sending point in an evolved system of a broadband wireless communication system.

### BACKGROUND

Researches on key technologies and the concept of International Mobile Telecommunications-Advanced (IMT-Advanced) have been carried out since the late twentieth century when 3G technology was standardized. Broadband wireless communication of the next generation represents the main developing direction of information technology. Market demand of the wireless mobile communication market will present a sustained and rapid growth in the future 10 to 15 years. According to technical requirements and objectives set by IMT-Advanced, IMT-Advanced will realize higher data rates and larger system capacities compared with existing systems and the target peak rate is higher than 1 Gbit/s in low speed mobile and hotspot coverage scenarios, and 100Mbit/s in high speed mobile and wide area coverage scenarios.

Coordinated Multi-Point (CoMP) transmission is introduced to solve the problem of inter-cell interference in an Orthogonal Frequency Division Multiplexing (OFDM) to increase the throughput of cell-edge mobile users, e.g. to eliminate Inter-Carrier Interference (ICI) by coordination of a plurality of Evolved Node Bases (eNB), or even change interference signals into desired signals. As research continues, it is found that applying CoMP in broadband wireless communication systems can increase the data transmission rate, the cell-edge mobile user throughput and the system throughput, which has become an important technology to increase system spectrum efficiency and has been accepted as one of IMT-Advanced technologies by the 3rd Generation Partnership Project (3GPP).

Because of channel fading and adjacent cell interference etc., the Quality of Service (QoS) of cell-edge mobile users will decrease compared with the throughput of central users.

CoMP refers to performing multipoint data transmission/reception for a User Equipment (UE) by a plurality of cells jointly when the UE is located at the edges of the plurality of cells, or eliminating inter-cell interference and increasing the signal quality and data throughput by coordination and scheduling among a plurality of cells. In the description of the current 36.814 frame, CoMP is divided into the following two categories:

(1) Joint Processing (JP): user data can be used in a base station in each coordination set.

(2) Coordinated Scheduling/Coordinated Beamforming (CS/CB): user data is available only in a serving base station.

A coordination set is defined as follows:

CoMP coordinated cell set: a group of sending points set by a network according to cell geographical distribution to directly or indirectly participate in initiating a Physical Downlink Shared Channel (PDSCH) to a UE.

CoMP measurement cell set: cells for users to perform periodic or non-periodic measurement and report related channel state and statistical information according to network requirements.

Serving cell: a cell that sends a Physical Downlink Control Channel (PDCCH) to a mobile station, and there is only one serving cell during a communication process.

According to the characteristics of CoMP, cells selected into a CoMP set have the following characteristics: CoMP cells use the same frequency band; sub-frames and symbols of air interfaces of CoMP cells are substantially aligned; when belonging to different base stations, cells in the CoMP set may interconnect via X2 interfaces to deliver messages.

In related arts, base stations are only divided into the JP mode and the CS/CB mode according to sharing conditions of users and the coordination set is mostly set to be a static mode or a semi-static mode without providing a specific flow for determining a downlink coordinated sending point.

### SUMMARY

The objective of the disclosure is to provide a method and an apparatus for selecting a coordinated sending point to solve the technical problem that no specific flow of selecting a coordinated sending point is provided in the prior art.

To realize the objective above, the disclosure provides a method for selecting a coordinated sending point to select a coordinated sending point during downlink CoMP communications. The method includes the following steps:

Step A: a serving base station receives measurement information of a coordinated cell reported by a mobile station, wherein the measurement information is acquired after the mobile station performs measurement on coordinated cells in a predetermined first coordinated cell list of a serving cell, and establishes, based on the reported measurement information, a second coordinated cell list of the serving cell, wherein coordinated cells in the second coordinated cell list are coordinated cells that are listed in the first coordinated cell list and have a signal strength greater than a predetermined first threshold value.

Step B: the serving base station selects coordinated cells in the second coordinated cell list that satisfy predetermined coordinated conditions as coordinated sending points of the serving cell.

Preferably, in step A of the selecting method, the measurement performed by the mobile station on the coordinated cells in the first coordinated cell list is a measurement that is triggered by the serving base station or the mobile station when the mobile station moves to an edge of the serving cell or when the QoS of the serving cell fails to satisfy a predetermined user requirement.

Preferably, in step B of the selecting method, when a base station to which a first coordinated cell in the second coordinated cell list belongs is the serving base station, the first coordinated cell is selected as a coordinated sending point and the working mode of the first coordinated cell is set to be a JP mode.

Preferably, when a base station to which a second coordinated cell in the second coordinated cell list belongs is not the serving base station, said Step B of the selecting method further includes following steps:

the serving base station performs information interaction with the base station to which the second coordinated cell belongs, and the second coordinated cell is selected as a coordinated sending point when the exchanged information indicates that the second coordinated cell satisfies the predetermined coordinated conditions.

Preferably, in the selecting method, the second coordinated cell is selected as the coordinated sending point when the exchanged information indicates that the second coordinated cell satisfies at least one of following coordinated conditions:

a. a load of the second coordinated cell is smaller than a predetermined second threshold value;

b. there is no conflict between resources occupied by the second coordinated cell and resources allocated to the mobile station by the serving base station;

c. the load of the second coordinated cell is greater than a predetermined third threshold value but smaller than a predetermined threshold value;

d. a measured power of the second coordinated cell is greater than a predetermined power threshold value; and

e. the measured power of the second coordinated cell is a coordinated cell with the highest measured power or the second highest measured power in the second coordinated cell list.

Preferably, in said step B of the selecting method, for the coordinated sending point belonging to a base station that is not the serving base station, the method further includes at least one of following steps:

setting a working mode of a coordinated sending point, resources occupied by which conflict with resources allocated by the serving base station, to be a CS/CB mode;

when a coordinated sending point and a serving cell are both provided with a single antenna or a single virtual antenna, the working mode of the coordinated sending point is set to be a JP mode;

the working mode of a coordinated sending point of the serving base station which fails to satisfy the user throughput requirement is set to be the JP mode; and

the working mode of a coordinated point, a load of which is greater than the predetermined third threshold value but smaller than the predetermined fourth threshold value, is set to be the CS/CB mode.

Preferably, the selecting method further includes following steps performed after step B:

the serving base station notifies the mobile station to measure channel information of the coordinated sending point; and

the serving base station, determines initial working parameters of the coordinated sending point according to channel measurement information of the coordinated sending point, and sends the initial working parameters to the coordinated sending point.

Preferably, in the selecting method, the channel information of the coordinated sending point is measured and acquired by the coordinated sending point according to a sounding signal sent by the mobile station.

In another aspect" an apparatus for selecting a coordinated sending point is provided to select a coordinated sending point during downlink CoMP communications. The apparatus includes a serving base station that includes a first processing module and a determining module. The first processing module is configured to receive measurement information of a coordinated cell reported by a mobile station, wherein the measurement information is acquired after the mobile station performs measurement on coordinated cells in a predetermined first coordinated cell list of a serving cell, and to establish, based on the reported measurement information, a second coordinated cell list of the serving cell, wherein coordinated cells in the second coordinated cell list are coordinated cells that are listed in the first coordinated cell list and have a signal strength greater than a predetermined first threshold value.

The determining module is configured to determine coordinated cells in the second coordinated cell list, which satisfy preset coordinated conditions, as coordinated sending points of the serving cell.

Preferably, the determining module of the selecting apparatus includes a first determining module.

The first determining module is configured to select the first coordinated cell as a coordinated sending point and set a working mode of the first coordinated cell to be a joint processing mode, when a base station to which a first coordinated cell in the second coordinated cell list belongs is the serving base station.

Preferably, the determining module of the selecting apparatus includes an interacting module and a second determining module.

The interacting module is configured to, when a base station to which a second coordinated cell in the second coordinated cell list belongs is not the serving base station, perform information interaction with the base station to which the second coordinated cell belongs.

The second determining module is configured to, when the exchanged information indicates that the second coordinated cell satisfies the preset coordinated conditions, determine the second coordinated cell as a coordinated sending point.

Preferably, the second determining module of the selecting apparatus is further configured to determine the second coordinated cell as a coordinated sending point when the exchanged information indicates that the second coordinated cell satisfies at least one of the following coordinated conditions:

a. a load of the second coordinated cell is smaller than a predetermined second threshold value;

b. there is no conflict between resources occupied by the second coordinated cell and resources allocated to the mobile station by the serving base station;

c. the load of the second coordinated cell is greater than a predetermined third threshold value but smaller than a predetermined fourth threshold value;

d. a measured power of the second coordinated cell is greater than a predetermined power threshold value; and

e. the measured power of the second coordinated cell is a coordinated cell with the highest measured power or the second highest measured power in the first coordinated cell list. Preferably, the second determining module of the selecting apparatus is further configured to determine the working mode of a coordinated sending point according to at least one of the following manners:

setting a working mode of a coordinated sending point, resources occupied by which conflict with resources allocated by the serving base station, to be a coordinated scheduling or coordinated beamforming mode;

setting the working mode of a coordinated sending point, resources occupied by which do not conflict with the resources allocated by the serving cell, to be a joint processing mode;

when a coordinated sending point and a serving cell are both provided with a single antenna or a single virtual antenna, setting the working mode of the coordinated sending point to be the joint processing mode;

setting the working mode of a coordinated sending point of the serving base station which fails to satisfy a user throughput requirement to be the joint processing mode; and

setting the working mode of a coordinated point, a load of which is greater than the predetermined third threshold value but smaller than the predetermined fourth threshold value, to be the coordinated scheduling or coordinated beamforming mode.

Preferably, the serving base station of the selecting apparatus further includes a second processing module and a parameter determining module.

The second processing module is configured to notify the mobile station to measure channel information of the coordinated sending point.

The parameter determining module is configured to determine initial working parameters of the coordinated sending point according to according to channel measurement information of the coordinated sending point, and send the initial working parameters to the coordinated sending point.

The disclosure has the following technical effects:

a serving base station receives measurement information of a coordinated cell reported by a mobile station, wherein the measurement information is acquired after the mobile station performs measurement on coordinated cells in a first coordinated cell list of a serving cell, establishes, based on the reported measurement information, a second coordinated cell list of the serving cell, and determines coordinated cells in the second coordinated cell list that satisfy preset coordinated conditions as coordinated sending points, thus providing a method for implementing CoMP to enter a downlink CoMP mode from a normal working mode, so that the mobile station located at the edge of a cell can obtain better QoS and user throughput.

## BRIEF DESCRIPTION OF THE DRAWINGS

Fig. 1 is a flowchart illustrating a method for selecting a coordinated sending point in an embodiment of the disclosure;

Fig. 2 is a flowchart illustrating a method for selecting a coordinated sending point in another embodiment of the disclosure;

Fig. 3 is a schematic diagram illustrating power range triggering coordinated measurement and selection in an embodiment of the disclosure;

Fig. 4 is a schematic diagram illustrating base station coordination in an embodiment of the disclosure;

Fig. 5 is a schematic diagram illustrating interaction between downlink CoMP base stations and an implementation process in an embodiment of the disclosure; and

Fig. 6 is a structural diagram illustrating an apparatus for selecting a coordinated sending point in an embodiment of the disclosure.

## DETAILED DESCRIPTION

To make the objective, technical solution and advantages of the disclosure clearer, the disclosure is described in detail below in conjunction with the accompanying drawings and embodiments.

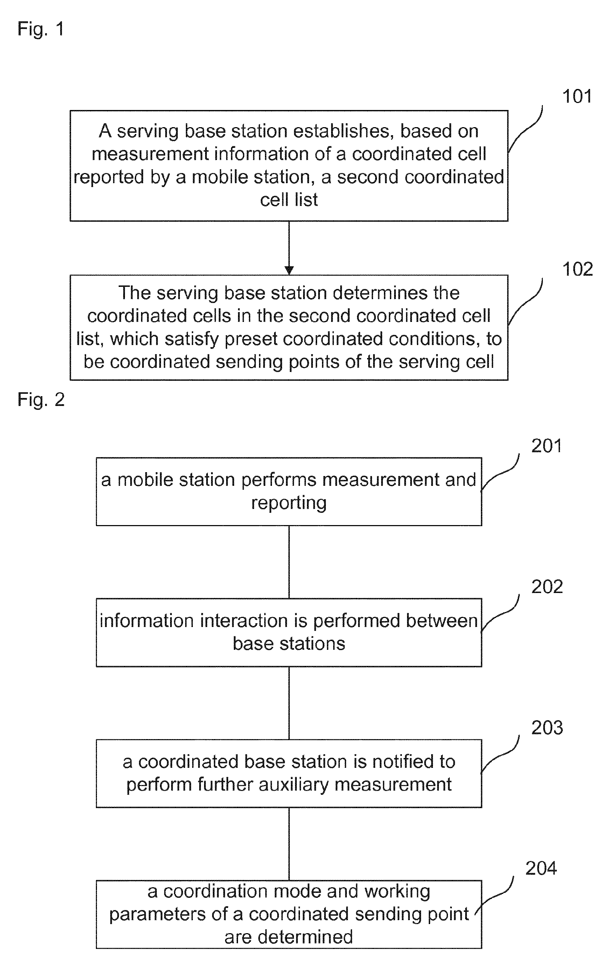

Fig. 1 is a flowchart illustrating a method for selecting a coordinated sending point in an embodiment of the disclosure. As shown in Fig. 1, the method for implementing CoMP communication of this embodiment includes the following steps:

Step 101: A serving base station establishes, based on measurement information of a coordinated cell reported by a mobile station, a second coordinated cell list.

The serving base station receives the measurement information of the coordinated cell reported by the mobile station, wherein the measurement information is acquired after the mobile station performs measurement on coordinated cells in a predetermined first coordinated cell list of a serving cell, and establishes, based on the reported measurement information, the second coordinated cell list of the serving cell. Coordinated cells in the second coordinated cell list are coordinated cells that are listed in the first coordinated cell list and have a signal strength greater than a first predetermined threshold value.

Exemplarily, in step 101, the coordinated cell measurement information reported by the mobile station is: the signal strength measurement information of the coordinated cells in the first coordinated cell list that have a signal strength greater than a predetermined first threshold value, or the measurement information of all coordinated cells in the first coordinated cell list. In the former case, the mobile station selects the coordinated cells whose signal strengths are greater than the predetermined first threshold value, and reports the measurement information of the coordinated cells to the serving base station. In the second case, the coordinated cells whose signal strengths are greater than the predetermined first threshold value are selected by the serving base station according to the measurement information reported by the mobile station.

Exemplarily, the first coordinated cell list can be preset by a system, e.g. a serving base station, according to geographic locations of surrounding cells. Further, the first coordinated cell list may be static or semi-static, and a mobile station UE of the serving cell is notified of the first coordinated cell list by the serving base station via a broadcast message or a control message.

Exemplarily, in said step 101, the measurement performed by the mobile station on the coordinated cells in the predetermined first coordinated cell list is a measurement that is triggered by the serving base station or the mobile station when the mobile station moves to an edge of the serving cell or when the QoS of the serving cell fails to satisfy a predetermined user requirement. Exemplarily, whether the QoS satisfies the predetermined user requirement may be determined by comparing a QoS value or a Bit Error Ratio (BER) value with a corresponding threshold value.

Step 102: The serving base station determines the coordinated cells in the second coordinated cell list, which satisfy preset coordinated conditions to be coordinated sending points of the serving cell.

In said Step 102, when a base station to which a first coordinated cell in the second coordinated cell list belongs is the serving base station, the first coordinated cell is determined as a coordinated sending point and the working mode of the first coordinated cell is set to be a JP mode.

Preferably, in Step B, when a base station to which a second coordinated cell in the second coordinated cell list belongs is not the serving base station, the selecting method further includes that: the serving base station performs information interaction with the base station to which the second coordinated cell belongs, and the second coordinated cell is determined as a coordinated sending point when the interaction information indicates that the second coordinated cell satisfies the preset coordinated conditions. In this step, exemplarily, the serving base station performs interaction with the base station to which a coordinated cell belongs via an X2 interface. Exemplarily, the interaction information between the serving base station and the base station to which the coordinated cell belongs may be the load information of the base station, the resource occupation information and/or the power allocation information, etc. Exemplarily, when the interaction information indicates that the load of the base station to which the second coordinated cell belongs, the occupied resources, and/or the measured power satisfy the preset coordinated conditions, the second coordinated cell is determined as a coordinated sending point. Exemplarily, the second coordinated cell is determined as a coordinated sending point when the interaction information indicates that the second coordinated cell satisfies at least one of following coordinated conditions:

> a. a load of the second coordinated cell is smaller than a predetermined second threshold value;

> b. there is no conflict between resources occupied by the second coordinated cell and resources allocated to the mobile station by the serving base station;

> c. the load of the second coordinated cell is greater than a predetermined third threshold value but smaller than a predetermined fourth threshold value;

> d. a measured power of the second coordinated cell is greater than a predetermined power threshold value;

> e. the measured power of the second coordinated cell is a coordinated cell with the highest measured power or the second highest measured power in the first coordinated cell list.

During implementation of a method for selecting a coordinated sending point in downlink CoMP communication in an embodiment of the disclosure, in the case that the geographic location of a base station to which a coordinated cell in a first coordinated cell belongs is different from the geographic location of a serving base station, it is required that the base station to which the coordinated cell in the first coordinated cell list belongs works at the same frequency band of the serving base station and is synchronous with the serving base station.

Exemplarily, in Step 101 of the embodiment of the disclosure, it is determined that the mobile station has moved to the edge of the serving cell when at least one of the following conditions is satisfied:

Condition 1: At least one of the following parameters of the serving cell is lower than a corresponding fifth threshold value: Reference Signal Received Power (RSRP), Reference Signal Received Quality (RSRQ), Signal-to-Noise Ratio (SNR) and Signal to Interference plus Noise Ratio (SINR);

Condition 2: at least one of the following parameters of at least one coordinated cell in the first coordinated cell list is higher than a corresponding sixth threshold: RSRP, RSRQ, SNR and SINR.

During a specific implementation process, a trigger mechanism of coordinated cell measurement may be that a coordinated cell measurement is triggered when a UE periodically measures that the RSRP, RSRQ, SINR and SNR of the current cell are smaller than a predetermined threshold value.

Exemplarily, a Radio Resource Control (RRC) measurement configuration Information Element (IE) may require a user who moves to the edge of a cell to perform coordinated cell measurement. The signal strength information to be measured may be RSRP, RSRQ, Received Signal Strength Indicator (RSSI), SINR, SNR, etc. Or a cell that satisfies requirements of a coordinated cell list may be selected according to a measurement result of an adjacent cell list to update coordinated cell measurement information.

Preferably, the mobile station performs the coordinated cell measurement according to the requirements of the RRC measurement configuration IE and the measurement results are reported by the mobile station selectively or all measurement results are reported by the mobile station. The conditions of the selective reporting may be: the coordinated cell having the highest received power or the second highest received power in all coordinated adjacent cell information ranked according to the power size may be reported, or the measurement value of a coordinated adjacent cell that is greater than a predetermined threshold value.

Exemplarily, the mobile station may initiate the coordinated cell measurement automatically according to a system configuration message when periodically measuring that the channel quality of the serving cell is close to the edge of the cell.

Exemplarily, the serving cell establishes, according the measurement information of the mobile station which moves to the edge of the cell or the measurement information of the mobile station whose QoS fails to satisfy the predetermined user requirement, the second coordinated cell list, i.e. a candidate coordinated sending point list of the mobile station. The mobile station which reports the coordinated cell measurement information may be one mobile station or a group of mobile stations with almost identical geographic locations.

Preferably, when a base station to which a coordinated cell belongs is not the serving base station, Step 102 of the method of the embodiment of the disclosure further includes at least one of the following steps:

the working mode of a coordinated sending point, resources occupied by which conflict with resources allocated by the serving base station, is set to be a CS/CB mode;

the working mode of a coordinated sending point, resources occupied by which do not conflict with resources allocated by the serving cell is set to be the JP processing mode;

when a coordinated sending point and a serving cell are both provided with a single antenna or a single virtual antenna, the working mode of the coordinated sending point is set to be the JP mode;

the working mode of a coordinated sending point that fails to satisfy the user throughput requirement is set to be the JP mode;

the working mode of a coordinated point, a load of which is greater than the predetermined third threshold value but smaller than the predetermined fourth threshold value, is set to be the CS/CB mode.

Preferably, after a coordinated sending point and the working mode of the coordinated sending point are determined, further auxiliary measurement is performed generally according to different requirements of the working mode.

Further, after the serving base station performs information interaction with the base station to which the coordinated cell belongs, a measurement pilot configuration and sending mode, a sending period and/or a specific sounding signal sent by the mobile station or configured to notify the base station to which the coordinated cell belongs to perform auxiliary measurement of the coordinated sending point may be further determined. These information may be used for further auxiliary measurement for a channel of the coordinated sending point.

An embodiment of the disclosure provides a CoMP implementation method to enter a CoMP mode from a normal working mode. By using the technical solution of the embodiment of the disclosure, a mobile station located at the edge of a cell may acquire better QoS and user throughput. Further, since the cells and the working modes of the coordinated sending points may change according to the actual wireless channel environment instead of remaining unchanged in the embodiment of the disclosure, the cells are able to work cooperatively in a better manner, which is beneficial to increase the cell-edge user rate and reliability.

After a coordinated sending point is determined, preferably after a coordinated sending point and the working mode of the coordinated sending point are determined, the method of the embodiment of the disclosure further includes following steps:

Step 103: The serving base station notifies the mobile station to measure channel information of the coordinated sending point. The channel measurement is an auxiliary measurement. Exemplarily, the measured channel information includes at least one of the following measurement parameters: a channel matrix of a coordinated cell, channel covariance, interference intensity, interfering beam direction, etc.

The channel information of the coordinated sending point is measured and acquired by the coordinated sending point according to a sounding signal sent by the mobile station.

Step 104: The serving base station determines initial working parameters of the coordinated sending point according to channel measurement information of the coordinated sending point, and sends the initial working parameters to the coordinated sending point.

By utilizing the measurement result of the auxiliary measurement above, different channel states may be fed back according to the working mode of the coordinated cell.

Preferably, the serving base station may further configure a measurement pilot of the coordinated cell, and the mobile station performs channel measurement for the coordinated sending point. Exemplarily, a cell of the measurement pilot in the serving base station remains orthogonal with that in a coordinated base station. The channel information is measured by the mobile station and fed back to the serving base station to adjust a downlink coordinated weight value.

Preferably, the serving base station may further require the mobile station to send a specific sounding signal so that the base station to which the coordinated cell belongs can perform the channel measurement for the coordinated sending point. Exemplarily, the sounding signal is preconfigured by the serving base station, and the mobile is notified of the sounding signal that is then sent by the mobile station. Exemplarily, the channel information of the coordinated sending point is acquired by the coordinated sending point by measuring the sounding signal of the mobile station by the coordinated cell after the sounding signal is sent by the mobile station. The mobile station sends the predetermined sounding signal to the base station to which the coordinated sending point belongs. The base station to which the coordinated cell belongs, i.e. the coordinated base station can obtain channel parameters of the coordinated cell, e.g. an uplink channel matrix, by performing channel measurement for the coordinated sending point according to the sounding signal sent by the mobile station. The obtained channel parameters such as the uplink channel matrix may be used for adjusting the downlink coordinated weight value. The coordinated base station sends the channel information of the coordinated sending point to the serving base station. The serving base station determines, based on the channel information of the coordinated sending point, the initial working parameters of the coordinated sending point and sends the initial working parameters to the coordinated sending point. The initial working parameters exemplarily include a sending weight value of the coordinated base station.

According to the result of the auxiliary measurement above, the serving base station selects a coordinated base station, performs information interaction with the coordinated base station, determines initial working parameters of the coordinated sending points, and sends the initial working parameters according to coordinated requirements. Coordination may be started subsequently among the coordinated sending points according to the determined initial working parameters. Exemplarily, for those coordinated sending points whose working modes are the JP mode, the determined initial working parameters include: resource scheduling, a sending weight value of a base station to which a coordinated cell belongs (i.e. a coordinated base station), and/or data of a coordinated mobile station. For those coordinated sending points whose working modes are the CS/CB mode, the determined initial working parameters include: resource scheduling, and/or a sending weight value of a coordinated base station.

The technical solution of the embodiment of the disclosure implements multi-cell optimization. By using optional working modes, a system-level interference is reduced, and cell-edge user rate and reliability are increased.

During specific implementation of the embodiment of the disclosure, it is required that the mobile station works in a connection state of the RRC and moves to the edge of a cell, that the coordinated cells work at the same frequency band and that cells remain synchronous.

The following description will give an example to explain a CoMP working mode of an embodiment of the disclosure.

In a CoMP system of the embodiment of the disclosure, a method for configuring a working mode of a coordinated cell in a coordinated area is as shown in Fig. 2 and mainly includes following four steps:

Step 201: A mobile station performs coordinated cell measurement according to a configuration and measurement mode and a measurement content of a system, i.e. a serving base station, and reports measurement information.

Step 202: Information interaction is performed between base stations to determine a coordinated sending point.

Step 203: A coordinated base station is notified to perform further auxiliary measurement.

Step 204: A coordination mode and working parameters of the coordinated sending point are determined.

When a base station to which a coordinated cell belongs and the service base station are the same eNB, no information interaction is needed between the base stations.

For a measurement process, a connection state measurement process in Long Term Evolution (LTE) during measurement of the current R8 version includes that: an evolved Universal Mobile Telecommunications System (UMTS) Terrestrial Radio Access Network (E-UTRAN) sends a reconfigured IE of a RRC. The reconfigured IE includes: a measurement ID and type, a measurement object, measurement number, measurement report number, reporting, etc. A UE, according to received measurement configuration IE requirements sent by the RRC, performs measurement, and determines whether or not reporting is needed according to measurement reporting standards.

In the measurement process of the coordinated cell in LTE in the embodiment of the disclosure, the main measurement content includes: RSRP, RSRQ and RSSI, wherein RSRQ=N×RSRP/(E-UTRA RSSI), where E-UTRA is a carrier.

An example for a triggered measurement process of a coordinated cell in LTE in an embodiment of the disclosure includes the following steps, and measurement of RSRP is taken as an example in this embodiment:

Step 1: The RSRP of a serving cell is detected to be smaller than I, measurement of a coordinated cell is then triggered, where I is a preconfigured threshold of the serving cell.

Step 2: An E-UTRAN sends an RRC reconfiguration message to configure a measurement IE.

Step 3: When a measurement time slot expires, a mobile station notifies a Downlink Physical Layer (DLPHY) to initiate measurement for an adjacent cell according to configuration of the measurement configuration IE.

Step 4: The mobile station determines a measurement result and reports an RRC message of the mobile station.

Step 5: The RRC of the mobile station encapsulates the measurement result to be an RRC message and reports the RRC message to a serving base station (eNB).

In this example, what is different from the R8 version is that: a coordinated cell list, instead of an adjacent cell list, is selected to be measured. In this example, such information as RSRP etc. for triggering the measurement of the coordinated cell is measured periodically via the current technology R8. It can be considered that the adjacent cell list is the same as the coordinated cell list if the network is a synchronous network in the same frequency. The coordinated cell list may be partially overlapped with the adjacent cell list. When they are overlapped, the measurement result can be updated according to the measurement result of an adjacent cell, thus reducing the number of coordinated cell measurement. The RRC IE is configured to indicate that there is no measurement of the coordinated cell overlapped with the adjacent cell.

In this example, a condition triggering the coordinated cell measurement may be that: the RSRP and/or the RSRQ of the serving cell are/is lower than a configuration threshold, or the RSRP and/or the RSRQ of the adjacent cell as a coordinated cell are/is higher than a certain threshold.

For CoMP, interaction information between base stations via X2 interfaces includes existing information of the R8 version and an additional interaction IE of the coordinated base station. The existing information of the R8 version includes: Relative Narrowband Tx Power (RNTP) indicator IE, configured to indicate whether or not the transmission power of each Physical Resource Block (PRB) is lower than an RNTP threshold; a load indicator IE, configured to indicate a load state; a radio resource status IE, configured to indicate usage of an uplink PRB and a downlink PRB; and a capacity value IE, configured to indicate the number of available resources in all E-UTRAN resources.

In the embodiment of the disclosure, the interaction information added to the coordinated base station includes:

a UE data IE, configured to indicate coordinated UE data exchanged by the coordinated base station to perform scheduling jointly to increase the throughput and reliability of the UE, and used under a JP mode;

a UE resource IE, configured to indicate coordinated UE resources occupied by the serving base station to enable the coordinated base station to determine whether to applies the JP mode or a CS/CB mode according to its load; and

a UE Channel State Information (CSI) IE, configured to indicate channel measurement data exchanged by the coordinated base station to calculate a sending weight value of the coordinated base station.

In this embodiment, the serving base station may perform further auxiliary measurement according to the measurement result of the coordinated base station and the interaction results of the X2 interfaces. During specific implementation, a base station with strong cell signal strength in a coordinated sending point list may be selected to perform further auxiliary measurement according to a preliminarily determined coordination mode. Exemplarily, each coordinated base station performs auxiliary measurement by configuring a measurement pilot of a coordinated cell, or a coordinated cell may also perform measurement according to a specific sounding signal for configuring the UE. The measurement content may be a channel matrix, channel covariance, interference intensity and/or interfering beam direction. The measurement content may vary with the working modes of coordinated base stations and coordination configuration modes.

In an embodiment of the disclosure, when configuring the working mode of a coordinated sending point and initial working parameters of the coordinated sending point, a serving base station selects preferentially, according to the result of the auxiliary measurement above and a coordinated scheduling result, a coordinated base station which is the same station with the serving base station to perform JP coordination and other coordinated base stations at different stations to perform CS/CB scheduling, thus reducing the interaction amount of X2 interfaces between base stations. Exemplarily, during specific implementation, the serving base station selects preferentially, according to the interaction result of the X2 interfaces, a coordinated base station with a low load to perform coordination, selects a base station with strong interference to perform coordination preferentially, selects a coordination mode according to data buffer and QoS of user scheduling, selects a coordinated base station as a JP coordinated base station according to a result of further channel measurement, exchanges coordinated data and coordinated working parameters via interfaces between base stations and performs coordinated scheduling. According to the result of the further channel measurement, a coordinated base station is selected as a CS/CB coordinated base station. Coordinated scheduling is performed and coordinated working parameters are exchanged via the interfaces among the base stations.

Two specific examples are given below to explain a method of an embodiment of the disclosure.

Embodiment 1

Step 1

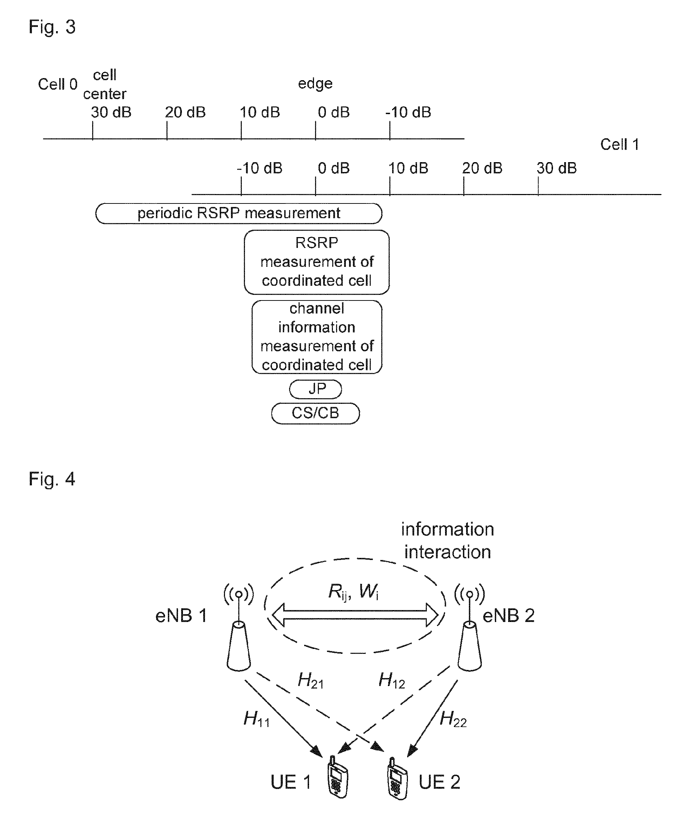

A base station (eNB) to which a target serving cell belongs sends a test command to a mobile station via a downlink control channel to require the mobile station to perform measurement on a configured cell according to requirements. Exemplarily, the configured cell is a preconfigured cell in a first coordinated cell list. The measurement content includes RSRP, RSRQ, etc. As shown in Fig. 3, in this embodiment, when the RSRP of a serving cell (cell 0) is located between 10dB and -10dB, it is determined that cell0 has moved to the edge of a cell and periodic measurement of a coordinated cell is started. Taking RSRP=10dB of the serving cell (cell 0) for example, when cell0 moves to the edge of the cell, the periodic measurement of the coordinated cell is started. What's shown in Fig. 3 exemplarily describes the power range of RSRP measurement of the coordinated cell, and does not serve to limit the disclosure. The RSRP range triggering the measurement of the coordinated cell may have various changes, and depends on the application scenarios of a cell, such as a macro cell, a micro cell, and a pico cell. In this embodiment, the measured signal strength of an adjacent cell as a coordinated cell is shown in the following Table 1:

Table 1

| Cell identifier | RSRP |
|---|---|
| Cell 1 | -3dB |
| Cell 2 | -5dB |
| Cell 3 | -7dB |
| Cell 4 | -15dB |

(continued)

| Cell identifier | RSRP |
|---|---|
| Cell 5 | -20dB |
| Cell 6 | -25dB |

Step 2

The mobile station selects, according to the measurement result of the first step, an eligible cell result to be reported. In this step, a reporting determining criterion may be that: a pilot signal strength condition of the adjacent cell is smaller than the pilot signal strength of the serving cell and greater than a set threshold. Exemplarily, the threshold value may be set as: (received power of coordinated cell reference symbol - received power of serving cell reference symbol) |dB < threshold value of received power of reference symbol, (received quality of coordinated cell reference symbol - received quality of serving cell reference symbol) |dB < threshold value of received quality of reference symbol. The set threshold may be configured by the serving base station according to service demands of the mobile station or the system load, or selected directly according to the RSRP value of a measured adjacent cell. In this embodiment, the measurement results of cell 4 and cell5 fail to satisfy reporting conditions and will not be reported. The reported measurement results of cell 1, cell 2 and cell 3 are specifically shown in the following Table 2:

Table 2

| Cell identifier | RSRP | |
|---|---|---|
| Cell1 | -3dB | Reported |
| Cell2 | -5dB | Reported |
| Cell3 | -7dB | Reported |
| Cell4 | | |
| Cell5 | | |
| Cell6 | | |

Step 3

If a measured cell and the serving cell belong to the same eNB, turn to Step 4. Otherwise, an X2 interface is started to exchange information between the base station to which the measured cell belongs ( i.e. the coordinated cell) and the serving base station, and the specific interaction information is shown in the following Table 3. In this embodiment, cell1 and cell0 are set to belong to the same eNB.

Table 3

| Serving cell | Interaction information | Adjacent cell |
|---|---|---|
| Cell 0 | | Cell 1 |
| Cell 0 | RNTP, Load Indicator IE, Radio Resource Status IE, Capacity Value IE, measurement pilot configuration, etc. | Cell 2 |
| Cell 0 | RNTP, Load Indicator IE, Radio Resource Status IE, Capacity Value IE, measurement pilot configuration, etc. | Cell 3 |

Step 4

Selection of a coordinated cell

In this embodiment, determining criterion for selecting a coordinated cell may be as follows: if the serving cell and the measured cell belong to the same eNB, the measured cell in this embodiment is a coordinated cell selected to be measured, and the measured cell may avoid using the same resources as that allocated to the serving cell and will be selected into a JP candidate set preferentially, i.e. the measured cell will selected as a coordinated sending point preferentially and the working mode thereof is determined to be a JP mode. According to cell antenna configuration, if both the serving cell and the measured cell are provided with a single antenna or a single virtual antenna, they are selected in the JP candidate set. If the serving cell and the measured cell, i.e. the coordinated cell, are close to the mobile station at the edge, allocate the same resources to the mobile station, and maximally allocate spatial characteristics according to various spatial characteristics, the measured cell is selected into a CB candidate set, i.e. the measured cell works according to a CB mode, and other base stations are selected in a CS candidate set, i.e. they work in a CS mode and interference coordinated processing is performed according to the R8 mode. The following Table 4 shows three coordinated sending points determined in an embodiment of the disclosure and their set working modes.

Table 4

|        | Working mode |  |
|--------|--------------|--|
| Cell 1 | JP           |  |
| Cell 2 | CB           |  |
| Cell 3 | CS           |  |

Step 5

Further measurement

A configuration manner of a cell pilot informing entering a coordinated cell may be a channel quality measurement pilot. In principle, pilots of each coordinated cell remain orthogonal or quasi-orthogonal to facilitate measurement, and further measurement may be performed according to system requirements.

For a coordinated sending point in the JP mode, information of the further measurement exemplarily includes: channel information $H_{ij}$ measured by a UE to each coordinated eNB, $H_{ij}$ here means the measurement is extended to the i users and the j base stations.

$\mathbf{H}_{ij}$, $i = 1,2,\cdots, M$ $j = 1,2,\cdots, N,$ where i is the user identifier, j is the base station identifier, and the channel matrix H is written as:

$$\mathbf{H} = \begin{bmatrix} \mathbf{H}_{11} & \mathbf{H}_{12} & \cdots & \mathbf{H}_{1N} \\ \mathbf{H}_{21} & \mathbf{H}_{22} & \cdots & \mathbf{H}_{2N} \\ \vdots & \vdots & \cdots & \vdots \\ \mathbf{H}_{M1} & \mathbf{H}_{M2} & \cdots & \mathbf{H}_{MN} \end{bmatrix}$$

In this embodiment, taking a serving base station (eNB 1) provided with a user UE 1 and a coordinated cell of a base station (eNB 2) to which the coordinated cell belongs is provided with an interfering user UE 2 for example, there are two cells, i.e. a serving cell and a coordinated cell, coordinated with each other. Fig. 4 shows a schematic diagram illustrating base station coordination in this embodiment.

In this embodiment, after the channel information is fed back to the serving base station, since the serving base station feeds back channels only by its serving UE, i.e. eNB 1 acquires H11 and H21, and eNB 1 acquires H22 and H12. After the channel matrix H is obtained through interaction between base stations, a pre-coding vector, i.e. a coordinated sending weight value W is calculated by the serving base station. Exemplarily, zero-forcing is applied to the calculation according to the following formula, i.e. the received interference is forced to be zero:

$$\mathbf{W} = \mathbf{H}^{H} \left( \mathbf{H}\mathbf{H}^{H} + \sigma^{2}\mathbf{I} \right)^{-1}$$

$\mathbf{W}_{j}$, $j = 1,2,\cdots N$ is the pre-coding of the $j^{\text{th}}$ eNB. $\mathbf{W}_{j}$, $j = 1,2,\cdots N$ is exchanged to an adjacent cell, where $\sigma^{2}$ is the noise variance, $H^{H}$ represents the conjugate transpose and I is the unit matrix. There are only two cells, cell0 whose weight value is W1 and cell1 whose weight value is W2. W2 is exchanged to base station 2 as the sending weight value of user 2 of base station 2, and W1 serves as the sending weight value of user 1 of base station 1 to realize coordination between base stations.

For a coordinated sending point of a CB mode, information of the further measurement exemplarily includes: channel information of the UE to each coordinated eNB, i.e. channel information $H_{ij}$ measured by a UE to each coordinated eNB, representing the channel matrix of the UE in the i$^{th}$ cell to the j$^{th}$ cell, i.e. $H_{ij}$, $i = 1,\cdots, M$ $j = 1,2,\cdots,N$, i is the user identifier, j is the base station identifier, and the channel matrix is written as:

$$\mathbf{H} = \begin{bmatrix} \mathbf{H}_{11} & \mathbf{H}_{12} & \cdots & \mathbf{H}_{1N} \\ \mathbf{H}_{21} & \mathbf{H}_{22} & \cdots & \mathbf{H}_{2N} \\ \vdots & \vdots & \cdots & \vdots \\ \mathbf{H}_{M1} & \mathbf{H}_{M2} & \cdots & \mathbf{H}_{MN} \end{bmatrix}$$

Exemplarily, taking a serving base station (eNB 1) provided with a user (UE 1) and a coordinated cell of a base station (eNB 2) to which the coordinated cell belongs is provided with an interfering user UE 2 for example, there are two cells, i.e. a serving cell and a coordinated cell, coordinated with each other. For the time being, a channel measured by the mobile station is:

$$\mathbf{H}_{ij}, i = 1, 2, \cdots, M \qquad j = 1, 2, \cdots, N$$

representing the channel matrix of the UE in the i$^{th}$ cell to the j$^{th}$ cell.

The channel-related matrix of the UE in the i$^{th}$ cell to the j$^{th}$ cell is calculated, $\mathbf{R}_{ij} = \mathbf{H}_{ij}^{H} \mathbf{H}_{ij}$. The mobile station feeds back $\mathbf{R}_{ij} = \mathbf{H}_{ij}^{H} \mathbf{H}_{ij}$ to the serving base station and $\mathbf{R}_{ij} = \mathbf{H}_{ij}^{H} \mathbf{H}_{ij}$ is exchanged between the base stations.

For CB based on the maximal Signal-to-leakage Ratio (SLR), i.e. even the ratio of the received available signal to the power leaked to other paired UEs is the maximal, the pre-coding matrix of the $j = 1,2,\cdots,N$$^{th}$ cell is:

$$\mathbf{W}_j = \underset{m_j}{eig}\left\{ \left( \sum_{i \neq j} \mathbf{R}_{ij} + \alpha \mathbf{I} \right)^{-1} \mathbf{R}_{jj} \right\}$$

$$\underset{m_j}{eig}\{\mathbf{R}\}$$

where represents the characteristic vector corresponding to the former $m_j$ largest characteristic values of R, $m_j$ represents the number of layers used by the UE in the j$^{th}$ cell, a is the noise variance, $H^H$ represents the conjugate transpose and I is the unit matrix. Transmission is performed according to the measured and obtained weight values shown in Table 5 and negotiated resources. In this embodiment, the coordinated sending point cell 1 works in the JP mode, and the initialization parameter thereof is the determined coordinated sending weight value W. The coordinated sending point cell 2 works in the CB mode, and the initialization parameter thereof is the determined coordinated sending weight value W. The coordinated sending point cell 3 works in the CS mode, and the determined coordinated action thereof is to reduce power which is the same as the resources of the serving base station and avoid the resources.

Table 5

|  | Working mode | Initialization parameter |
|---|---|---|
| Cell 1 | JP | W1 |
| Cell 2 | CB | W2 |
| Cell 3 | CS | Reduce power, avoid resources |

Embodiment 2

In the second embodiment, steps 1 to 4 are the same as steps 1 to 4 in the first embodiment and Step 5 is different.

In this embodiment, the further measurement in Step 5 includes:

the serving base station notifies a coordinated base station of the sounding signal configured by the coordinated UE via interaction between the base stations.

Each coordinated base station measures the sounding signal of the UE and obtains channel information of each coordinated base station, $H_{ij}$, $i = 1,2,\cdots,M$ $j = 1,2,\cdots,N$.

The coordinated base stations start to exchange CSI and calculate sending weight values.

Transmission is performed according to the measured and obtained weight values as shown in the Table 5 above and the negotiated resources.

A method for implementing CoMP communication of an embodiment of the disclosure provides a method for measuring and configuring a coordination mode for a base station in a coordination set according to a user, so as to configure the coordinated base station in the coordination set and working parameters of the coordinated base station reasonably.

The more the number of coordinated cells is, the more advantageous the technical solution of the disclosure is.

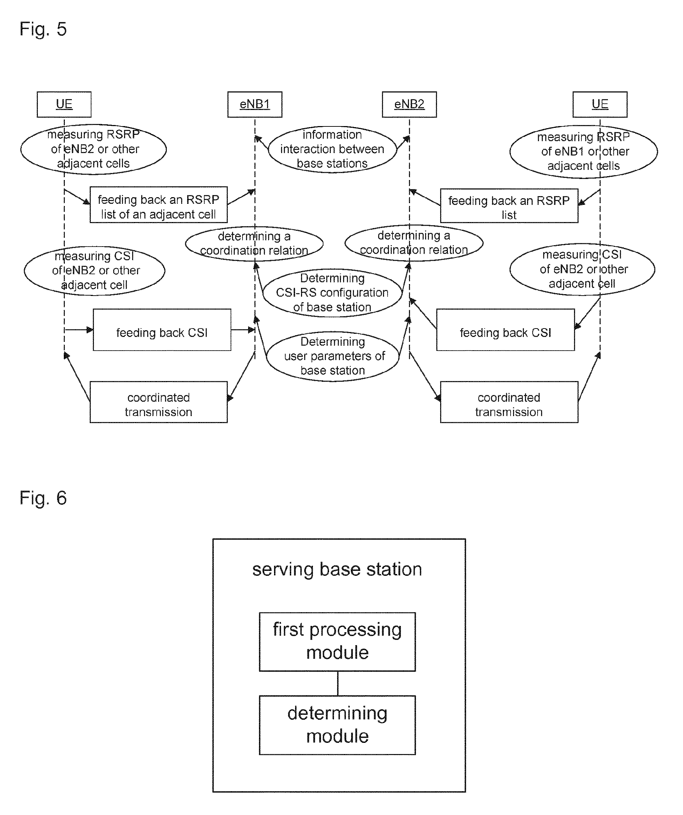

Fig. 5 shows a schematic diagram illustrating a downlink CoMP communication process of an embodiment of the disclosure. As shown in Fig. 5, it is provided in this embodiment that a serving base station of UE 1 is base station 1 (eNB 1), a serving base station of UE 2 is base station 2 (eNB 2), base station 2 serves as the base station to which an adjacent cell of UE 1 belongs, and base station 1 serves as the base station to which an adjacent cell of UE 2 belongs. The adjacent cells in this embodiment are coordinated cells. A process for realizing coordinated communication between base station 1 and base station 2 by using a method of an embodiment of the disclosure includes:

For UE 1:

When UE 1 moves to the edge of base station 1, measurement of signal strength of a coordinated cell is triggered and the signal strength of base station 2 is measured. In this embodiment, the RSRP of the coordinated cell is measured and the process further includes measuring the signal strengths of other coordinated cells. After the measurement, UE 1 feeds back an RSRP list of the measured coordinated cell, i.e. an adjacent cell in this embodiment to base station 1. Base station 1 exchanges information with base station 2, and a coordination relation and configuration of a CSI-Reference Signal (CSI-RS) are determined. After the coordination relation is determined, base station 1 requires UE 1 to measure the channel quality of base station 2. In this embodiment, the parameter CSI of base station 2 is measured. After measuring the CSI value of base station 2, UE 1 feeds back the value to base station 1 and base station 1 determines working parameters of a coordinated base station, which includes a user parameter, and performs coordinated transmission to UE 1 according to a coordination mode of the base station. Base station 1 in a CB mode transmits data to UE 1 so as to minimize interference of base station 1 to user 2.

For UE 2:

When UE 2 moves to the edge of base station 2, measurement of signal strength of a coordinated cell is triggered and the signal strength of base station 1 is measured. In this embodiment, the RSRP of the coordinated cell is measured and the process further includes measuring the signal strengths of other coordinated cells. After the measurement, UE 2 feeds back an RSRP list of the measured coordinated cell, i.e. an adjacent cell in this embodiment to base station 2. Base station 1 exchanges information with base station 2, and a coordination relation and configuration of a CSI-RS are determined. After the coordination relation is determined, base station 2 requires UE 2 to measure the channel quality of base station 1. In this embodiment, the parameter CSI of base station 1 is measured. After measuring the CSI value of base station 1, UE 2 feeds back the value to base station 2 and base station 2 determines working parameters of a coordinated base station, which includes a user parameter, and performs coordinated transmission to UE 2 according to a coordination mode of the base station. Base station 2 in a CB mode transmits data to UE 2 so as to minimize interference of base station 2 to user 1.

In this embodiment, taking UE 1 which is only provided with cells of base station 2 as coordinated cells and UE 2 which is only provided cells of base station 1 as coordinated cells for example, UE 1 and UE 2 may be further provided with other coordinated cells. Measurement processes for other coordinated cells are similar, which will not be repeated here.

An embodiment of the disclosure further provides an apparatus for selecting a coordinated sending point to select a coordinated sending point during downlink CoMP communications. As shown in Fig. 6, the selecting apparatus includes a serving base station. The serving base station includes a first processing module and a determining module.

The first processing module is configured to receive measurement information of a coordinated cell reported by a mobile station, wherein the measurement information is acquired after the mobile station performs measurement on coordinated cells in a predetermined first coordinated cell list of a serving cell, and to establish, based on the reported measurement information, a second coordinated cell list of the serving cell, wherein coordinated cells in the second coordinated cell list are coordinated cells that are listed in the first coordinated cell list and have a signal strength greater than a predetermined first threshold value.

The determining module is configured to determine coordinated cells in the second coordinated cell list, which satisfy predetermined coordinated conditions, as coordinated sending points of the serving cell.

Preferably, the determining module of the selecting apparatus includes in the second coordinated cell list.

The first determining module is configured to select the first coordinated cell as a coordinated sending point and set a working mode of the first coordinated cell to be a joint processing mode, when a base station to which a first coordinated cell in the second coordinated cell list belongs is the serving base station.

Preferably, the determining module of the selecting apparatus includes an interacting module and a second determining module.

The interacting module is configured to, when a base station to which a second coordinated cell in the second coordinated cell list belongs is not the serving base station, perform information interaction with the base station to which the second coordinated cell belongs.

The second determining module is configured to, when the exchanged information indicates that the second coordinated cell satisfies the preset coordinated conditions, determine the second coordinated cell as a coordinated sending point.

Preferably, the second determining module of the selecting apparatus is further configured to determine the second coordinated cell as a coordinated sending point when the exchanged information indicates that the second coordinated cell satisfies at least one of the following coordinated conditions:

a. a load of the second coordinated cell is smaller than a predetermined second threshold value;

b. there is no conflict between resources occupied by the second coordinated cell and resources allocated to the mobile station by the serving base station;

c. the load of the second coordinated cell is greater than a predetermined third threshold value but smaller than a predetermined fourth threshold value;

d. a measured power of the second coordinated cell is greater than a predetermined power threshold value; and

e. the measured power of the second coordinated cell is a coordinated cell with the highest measured power or the second highest measured power in the second coordinated cell list.

Preferably, the second determining module of the selecting apparatus is further configured to determine the working mode of a coordinated sending point according to at least one of the following manners:

the working mode of a coordinated sending point whose occupied resources conflict with resources allocated by the serving base station is set to be a CS/CB mode;

the working mode of a coordinated sending point whose occupied resources do not conflict with the resources allocated by the serving cell is set to be the JP processing mode;

when a coordinated sending point and a serving cell are both provided with a single antenna or a single virtual antenna, the working mode of the coordinated sending point is set to be the JP mode;

the working mode of a coordinated sending point of the serving base station which fails to satisfy the user throughput requirement is set to be the JP mode;

the working mode of a coordinated point whose load is greater than the predetermined third threshold value but smaller than the predetermined fourth threshold value is determined to be the CS/CB mode.

Preferably, the serving base station of the selecting apparatus further includes a second processing module and a parameter determining module.

The second processing module is configured to notify the mobile station to measure channel information of the coordinated sending point.

The parameter determining module is configured to, according to channel measurement information of the coordinated sending point, determine initial working parameters of the coordinated sending point and send the initial working parameters to the coordinated sending point.

The technical solution of the embodiments of the disclosure relates to a process for selecting a coordinated sending point, a method for determining a working mode and a method for initializing parameters. According to a measurement result of a coordinated cell and information interaction of base stations, a sending point of a base station participating in the coordination is selected in a second coordinated cell list. A coordination mode of the base station participating in coordination is configured so as to enable the base station in the second coordinated cell list to work in both a JP mode and a CS/CB mode, or remain the original scheduling mode without participating in the coordination. By using the technical solution of the embodiments of the disclosure, cells of coordinated sending points and working modes of the coordinated sending points are not fixed, but can change according to the actual wireless channel environment, thus the cells can work cooperatively in a better manner, which is beneficial to increase the cell-edge user rate and reliability.

The above are only preferred embodiments of the disclosure. For those skilled in the art, it should be noted that the disclosure may have some improvements and modifications without departing from the principle of the disclosure. These improvements and modifications shall fall within the scope of protection of the disclosure.

**Claims**

1. A method for selecting a coordinated sending point, to select a coordinated sending point during downlink coordinated multi-point communications, comprising:

   in step A, receiving, by a serving base station, measurement information of a coordinated cell reported by a mobile station, wherein the measurement information is acquired after the mobile station performs measurement on coordinated cells in a predetermined first coordinated cell list of a serving cell; and establishing, based on the reported measurement information, a second coordinated cell list of the serving cell, wherein coordinated cells in the second coordinated cell list are coordinated cells that are listed in the first coordinated cell list and have a signal strength greater than a predetermined first threshold value; and
   in step B, determining, by the serving base station, coordinated cells in the second coordinated cell list that satisfy preset coordinated conditions to be coordinated sending points of the serving cell.

2. The method according to claim 1, wherein in said step A, the measurement performed by the mobile station on the coordinated cells in the first coordinated cell list is a measurement that is triggered by the serving base station or the mobile station when the mobile station moves to an edge of the serving cell or when a quality of service of the serving cell fails to satisfy a predetermined user requirement.

3. The method according to claim 1, wherein in said step B, when a base station to which a first coordinated cell in the second coordinated cell list belongs is the serving base station, determining the first coordinated cell to be a coordinated sending point and setting a working mode of the first coordinated cell to be a joint processing mode.

4. The method according to claim 1, wherein in said step B, when a base station to which a second coordinated cell in the second coordinated cell list belongs is not the serving base station, the method further comprising: performing, by the serving base station, information interaction with the base station to which the second coordinated cell belongs; and
   determining, by the serving base station, the second coordinated cell to be a coordinated sending point when interaction information indicates that the second coordinated cell satisfies the preset coordinated conditions.

5. The method according to claim 4, wherein determining the second coordinated cell to be a coordinated sending point when the interaction information indicates that the second coordinated cell satisfies at least one of the following coordinated conditions:

   a. a load of the second coordinated cell is smaller than a predetermined second threshold value;
   b. there is no conflict between resources occupied by the second coordinated cell and resources allocated to the mobile station by the serving base station;
   c. the load of the second coordinated cell is greater than a predetermined third threshold value but smaller than a predetermined fourth threshold value;

d. a measured power of the second coordinated cell is greater than a predetermined power threshold value; and

e. the measured power of the second coordinated cell is a coordinated cell with the highest measured power or the second highest measured power in the second coordinated cell list.

6. The method according to claim 4 or 5, wherein in said step B, for the coordinated sending point belonging to a base station that is not the serving base station, the method further comprising at least one of the following steps:

setting a working mode of a coordinated sending point, resources occupied by which conflict with resources allocated by the serving base station, to be a coordinated scheduling or coordinated beamforming mode;

when a coordinated sending point and a serving cell are both provided with a single antenna or a single virtual antenna, setting the working mode of the coordinated sending point to be a joint processing mode;

setting the working mode of a coordinated sending point of the serving base station, which fails to satisfy a user throughput requirement, to be the joint processing mode; and

setting the working mode of a coordinated point, a load of which is greater than the predetermined third threshold value but smaller than the predetermined fourth threshold value, to be the coordinated scheduling or coordinated beamforming mode.

7. The method according to any of claims 1 to 5, further comprising the step, performed after said step B, of:

notifying, by the serving base station, the mobile station to measure channel information of the coordinated sending point; and

determining, by the serving base station, initial working parameters of the coordinated sending point according to the measured channel information of the coordinated sending point, and sending the initial working parameters to the coordinated sending point.

8. The method according to claim 7, wherein the channel information of the coordinated sending point is measured and acquired by the coordinated sending point according to a sounding signal sent by the mobile station.

9. An apparatus for selecting a coordinated sending point, to select a coordinated sending point during downlink coordinated multi-point communications, comprising a serving base station that comprises:

a first processing module configured to receive measurement information of a coordinated cell reported by a mobile station, wherein the measurement information is acquired after the mobile station performs measurement on coordinated cells in a predetermined first coordinated cell list of a serving cell, and to establish, based on the reported measurement information, a second coordinated cell list of the serving cell, wherein coordinated cells in the second coordinated cell list are coordinated cells that are listed in the first coordinated cell list and have a signal strength greater than a predetermined first threshold value; and

a determining module configured to determine coordinated cells in the second coordinated cell list, which satisfy preset coordinated conditions, to be coordinated sending points of the serving cell.

10. The apparatus according to claim 9, wherein the determining module comprises a first determining module that is configured to:

when a base station to which a first coordinated cell in the second coordinated cell list belongs is the serving base station, determine the first coordinated cell to be a coordinated sending point and set a working mode of the first coordinated cell to be a joint processing mode.

11. The apparatus according to claim 9, wherein the determining module comprises:

an interaction module configured to, when a base station to which a second coordinated cell in the second coordinated cell list belongs is not the serving base station, perform information interaction with the base station to which the second coordinated cell belongs; and

a second determining module configured to, when interaction information indicates that the second coordinated cell satisfies the preset coordinated conditions, determine the second coordinated cell to be a coordinated sending point.

12. The apparatus according to claim 11, wherein the second determining module is further configured to determine the second coordinated cell to be a coordinated sending point when the exchanged information indicates that the second coordinated cell satisfies at least one of the following coordinated conditions:

a. a load of the second coordinated cell is smaller than a predetermined second threshold value;
b. there is no conflict between resources occupied by the second coordinated cell and resources allocated to the mobile station by the serving base station;
c. the load of the second coordinated cell is greater than a predetermined third threshold value but smaller than a predetermined fourth threshold value;
d. a measured power of the second coordinated cell is greater than a predetermined power threshold value; and
e. the measured power of the second coordinated cell is a coordinated cell with the highest measured power or the second highest measured power of a in the first coordinated cell list.

13. The apparatus according to claim 11 or 12, wherein the second determining module is further configured to determine a working mode of a coordinated sending point according to at least one of the following manners:

setting a working mode of a coordinated sending point, resources occupied by which conflict with resources allocated by the serving base station, to be a coordinated scheduling or coordinated beamforming mode;
setting the working mode of a coordinated sending point, resources occupied by which do not conflict with the resources allocated by the serving cell, to be a joint processing mode;
when a coordinated sending point and a serving cell are both provided with a single antenna or a single virtual antenna, setting the working mode of the coordinated sending point to be the joint processing mode;
setting the working mode of a coordinated sending point of the serving base station, which fails to satisfy a user throughput requirement, to be the joint processing mode; and
setting the working mode of a coordinated point, a load of which is greater than the predetermined third threshold value but smaller than the predetermined fourth threshold value, to be the coordinated scheduling or coordinated beamforming mode.

14. The apparatus according to any of claims 9 to 12, wherein the serving base station further comprises:

a second processing module configured to notify the mobile station to measure channel information of the coordinated sending point; and
a parameter determining module configured to determine initial working parameters of the coordinated sending point according to channel measurement information of the coordinated sending point, and to send the initial working parameters to the coordinated sending point.

Fig. 1

```
┌─────────────────────────────────────┐
│ A serving base station establishes,  │      101
│ based on measurement information of  │
│ a coordinated cell reported by a     │
│ mobile station, a second coordinated │
│ cell list                            │
└─────────────────────────────────────┘
                    │
                    ▼
┌─────────────────────────────────────┐
│ The serving base station determines  │      102
│ the coordinated cells in the second  │
│ coordinated cell list, which satisfy │
│ preset coordinated conditions, to    │
│ be coordinated sending points of the │
│ serving cell                         │
└─────────────────────────────────────┘
```

Fig. 2

```
┌─────────────────────────────────────┐
│ a mobile station performs            │      201
│ measurement and reporting            │
└─────────────────────────────────────┘
                    │
┌─────────────────────────────────────┐
│ information interaction is performed  │      202
│ between base stations                │
└─────────────────────────────────────┘
                    │
┌─────────────────────────────────────┐
│ a coordinated base station is        │      203
│ notified to perform further          │
│ auxiliary measurement                │
└─────────────────────────────────────┘
                    │
┌─────────────────────────────────────┐
│ a coordination mode and working      │      204
│ parameters of a coordinated sending  │
│ point are determined                 │
└─────────────────────────────────────┘
```

Fig. 3

Cell 0  cell center                          edge

| 30 dB | 20 dB | 10 dB | 0 dB | -10 dB |

Cell 1

| | | -10 dB | 0 dB | 10 dB | 20 dB | 30 dB |

periodic RSRP measurement

RSRP
measurement of
coordinated cell

channel
information
measurement of
coordinated cell

JP

CS/CB

Fig. 4

information
interaction

$R_{ij}$, $W_i$

eNB 1

eNB 2

$H_{21}$   $H_{12}$

$H_{11}$         $H_{22}$

UE 1      UE 2

Fig. 5

| UE | | eNB1 | | eNB2 | | UE |

measuring RSRP of eNB2 or other adjacent cells

information interaction between base stations

measuring RSRP of eNB1 or other adjacent cells

feeding back an RSRP list of an adjacent cell

feeding back an RSRP list

determining a coordination relation

determining a coordination relation

measuring CSI of eNB2 or other adjacent cell

Determining CSI-RS configuration of base station

measuring CSI of eNB2 or other adjacent cell

feeding back CSI

Determining user parameters of base station

feeding back CSI

coordinated transmission

coordinated transmission

Fig. 6

serving base station

first processing module

determining module

<table>
<tr><td colspan="2"><strong>INTERNATIONAL SEARCH REPORT</strong></td><td>International application No.<br>PCT/CN2010/077885</td></tr>
</table>

**A. CLASSIFICATION OF SUBJECT MATTER**

H04W48/20 (2009.01) i

According to International Patent Classification (IPC) or to both national classification and IPC

**B. FIELDS SEARCHED**

Minimum documentation searched (classification system followed by classification symbols)

IPC: H04W; H04L;H04B; H04Q

Documentation searched other than minimum documentation to the extent that such documents are included in the fields searched

Electronic data base consulted during the international search (name of data base and, where practicable, search terms used)

CNABS; CNKI; WPI; EPODOC: coordinated cooperation coordination cooperative cell base station node measure+ threshold preset value comp

**C. DOCUMENTS CONSIDERED TO BE RELEVANT**

| Category* | Citation of document, with indication, where appropriate, of the relevant passages | Relevant to claim No. |
|---|---|---|
| A | CN101594644A (UNIV XIDIAN) 02 Dec. 2009(02.12.2009) the whole document | 1-14 |
| A | CN101399583A (UNIV XIDIAN) 01Apr. 2009(01.04.2009) the whole document | 1-14 |
| A | US2008167041A1(INTERDIGITAL TECHNOLOGY CORP)<br>10July 2008 (10.07.2008) the whole document | 1-14 |

☐ Further documents are listed in the continuation of Box C.  ☒ See patent family annex.

| | |
|---|---|
| \* Special categories of cited documents:<br><br>"A" document defining the general state of the art which is not considered to be of particular relevance<br><br>"E" earlier application or patent but published on or after the international filing date<br><br>"L" document which may throw doubts on priority claim (S) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&"document member of the same patent family |
| Date of the actual completion of the international search<br><br>28 Mar. 2011 (28.03.2011) | Date of mailing of the international search report<br><br>**07 Apr. 2011 (07.04.2011)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>WANG, Ran<br><br>Telephone No. (86-10)62411390 |

Form PCT/ISA /210 (second sheet) (July 2009)

## INTERNATIONAL SEARCH REPORT
Information on patent family members

| International application No. |
| --- |
| PCT/CN2010/077885 |

| Patent Documents referred in the Report | Publication Date | Patent Family | Publication Date |
| --- | --- | --- | --- |
| CN101594644A | 02.12.2009 | NONE | |
| CN101399583A | 01.04.2009 | NONE | |
| US2008167041A1 | 10.07.2008 | WO2008085838A1 | 17.07.2008 |
| | | TW200830895A | 16.07.2008 |

Form PCT/ISA /210 (patent family annex) (July 2009)